Europäisches Patentamt

European Patent Office

Office européen des brevets

(11) Publication number: **0 445 771 A2**

# EUROPEAN PATENT APPLICATION

(21) Application number: **91103408.0**

(22) Date of filing: **06.03.91**

(51) Int. Cl.⁵: **C04B 35/58**

(30) Priority: **07.03.90 JP 53808/90**

(43) Date of publication of application:
**11.09.91 Bulletin 91/37**

(84) Designated Contracting States:
**DE FR GB SE**

(71) Applicant: **NKK CORPORATION**
**1-2 Marunouchi 1-chome, Chiyoda-ku**
**Tokyo(JP)**

(72) Inventor: **Kawashima, Takeshi**
**c/o NKK Corporation, 1-2, Marunouchi**
**1-chome**
**Chiyoda-ku, Tokyo(JP)**
Inventor: **Okamoto, Hiromi**
**c/o NKK Corporation, 1-2, Marunouchi**
**1-chome**
**Chiyoda-ku, Tokyo(JP)**
Inventor: **Yamamoto, Hideharu**
**c/o NKK Corporation, 1-2, Marunouchi**
**1-chome**
**Chiyoda-ku, Tokyo(JP)**
Inventor: **Kitamura, Akira**
**c/o NKK Corporation, 1-2, Marunouchi**
**1-chome**
**Chiyoda-ku, Tokyo(JP)**

(74) Representative: **Patentanwälte Grünecker,**
**Kinkeldey, Stockmair & Partner**
**Maximilianstrasse 58**
**W-8000 München 22(DE)**

(54) High toughness silicon nitride sintered body.

(57) A monolithic silicon nitride sintered body, consisting essentially of $\beta$-$Si_3N_4$ columnar crystals of which the mean diameter in the minor axis of the largest five crystals appearing in a cut area of 7,000 $\mu m^2$ is 6 to 20 $\mu m$, and having a fracture toughness of not less than 8 MPa·$m^{1/2}$. In the present invention, the diameter of $\beta$-columnar crystals is increased by controlling the sintering process, and the toughness of the silicon nitride sintered body is improved. Since the sintered body is monolithic, it is possible to produce uniform and high toughness silicon nitride sintered bodies with little dispersion in the quality, irrespective of the form of the sintered body.

## FIG. 1

## BACKGROUND OF THE INVENTION

This invention relates to a silicon nitride sintered body of which the toughness is improved.

Silicon nitride sintered bodies are excellent in high temperature strength, corrosion resistance, wear resistance and the like, and therefore, they are remarked as parts for high temperature devices such as gas turbine and Diesel engine, wear-resistant parts such as bearing and nozzle, and corrosion-resistant parts such as chemical pump. However, they have not been widely utilized yet due to the low toughness and the low reliability. Therefore, many investigations have been conducted for improving the toughness of silicon nitride.

It is known to improve the toughness of silicon nitride by blending whiskers such as SiC whiskers or by blending long fibers.

Besides, as a method for improving the toughness in a monolithic structure, it was reported that to use $\beta$-columnar crystals having a high aspect ratio (F.F. Lange, J. Am. Ceramic. Soc., 62, 428-430, 1979) and to render $\beta$-columnar crystals big (Am. Ceram. Soc. Bull., 65(9), 1311, 1986) are effective. However, the quantitative relation between $\beta$-columnar crystal and fracture toughness is not reported.

When silicon nitride is made tough by blending whiskers or long fibers, it is necessary to disperse them uniformly. However, it is not easy to disperse whiskers or fibers, and entirely uniform dispersion is almost impossible. Moreover, some forming processes such as slip casting and injection molding are unsuitable for forming the blend with keeping the uniformly dispersed state. To sinter the blend containing whiskers or fibers is not easy, and even if hot pressing is used, to densify it near the theoretical density is difficult.

On the other hand, the methods for improving the toughness in a monolithic structure using the high aspect ratio crystals or the big crystals are insufficient for the improvement in the toughness.

## SUMMARY OF THE INVENTION

An object of the invention is to provide a monolithic silicon nitride sintered body having a high toughness capable of producing it through a simple process.

The present invention provides a monolithic silicon nitride sintered body which has achieved the above object, consisting essentialy of $\beta$-Si$_3$N$_4$ columnar crystals of which the mean diameter in the minor axis of the largest five crystals appearing in a cut area of 7,000 $\mu$m$^2$ is 6 to 20 $\mu$m, and having a fracture toughness of not less than 8 MPa•m$^{1/2}$.

## BRIEF DESCRIPTION OF THE DRAWINGS

Figure 1 is a photograph indicating a crystal structure of a sintered body of an example of the invention.

Figure 2 is a photograph indicating a crystal structure of a sintered body of a comparative example.

Figure 3 is a graph indicating a relation between the particle size of the $\beta$-Si$_3$N$_4$ columnar crystal and fracture toughness.

## DETAILED DESCRIPTION OF THE INVENTION

The raw silicon nitride powder used for the production of the monolithic silicon nitride sintered body of the invention is Si$_3$N$_4$ which may be a usual one for the production of ceramic sintered bodies. However, the Si$_3$N$_4$ powder of which the $\alpha$-Si$_3$N$_4$ content is high is preferred, and a preferable content of $\alpha$-Si$_3$N$_4$ is more than 90 %, particularly more than 95 %. The purity of the Si$_3$N$_4$ powderis preferably high, and more than 98 % is preferred. A suitable particle size is about 0.1 to 3 $\mu$m, preferably about 0.1 to 1 $\mu$m.

Suitable additives used for the production of a sintered body may be added to the silicon nitride powder, and sintering aid is preferred. Suitable sintering aid includes Y$_2$O$_3$, rare earth oxides, Al$_2$O$_3$, MgO, AlN and the like. A suitable content of the sintering aid is 3 to 30 wt. %, preferably 5 to 20 wt. %.

The forming process to form the raw powder into a prescribed form may be a known process, such as injection molding, slip casting, press molding or CIP molding.

The sintering conditions are set so that the width axis of the columnar crystal and the fracture toughness of the sintered body fall in the aforementioned ranges. Among various sintering conditions, sintering temperature is particularly effective, and it is preferably not less than 1,800° C, particularly 1,900 to 2,00° C. In addition, sintering period and the rate of temperature rise are also effective. The sintering process may be conducted by HIP.

During the temperature rise in the sintering process, $\alpha$-Si$_3$N$_4$ dissolves in the sintering aid, and $\beta$-Si$_3$N$_4$ columnar crystals reprecipitate. By controlling the solution-reprecipitation conditions, the $\beta$-Si$_3$N$_4$ columnar

crystals having a width axis diameter of 6 to 20 $\mu$m can be formed, and the fracture toughness of the sintered body can be rendered of more than 8 MPa•m$^{1/2}$.

The monolithic silicon nitride sintered body thus obtained consists essentially of $\beta$-Si$_3$N$_4$ columnar crystals of which the mean diameter in the minor axis of the largest five crystals appearing in a cut area of 7,000 $\mu$m$^2$ is 6 to 20 $\mu$m, preferably 10 to 20 $\mu$m, and has a fracture toughness of not less than 8 MPa•m$^{1/2}$, usually 8 to 13 MPa•m$^{1/2}$, particularly 10 to 13 MPa•m$^{1/2}$.

In the present invention, the diameter of $\beta$-columnar crystals is increased by controlling the sintering process, and the toughness of the silicon nitride sintered body is improved. Since the sintered body is monolithic, it is possible to produce uniform and high toughness silicon nitride sintered bodies with little dispersion in the quality, irrespective of the form of the sintered body. The silicon nitride sintered body can be used for various purposes due to the high toughness of not less than 8 MPa• m$^{1/2}$.

EXAMPLES

The raw silicon nitride powder was Si$_3$N$_4$ powder having an $\alpha$-Si$_3$N$_4$ content of 95 % and a mean particle size of 0.2 $\mu$m. 93 wt. % of the raw silicon nitride powder was mixed with 5 wt. % of Y$_2$O$_3$ powder having a mean particle size of 3.0 $\mu$m and 2 wt. % of Al$_2$O$_3$ powder having a mean particle size of 3.0 $\mu$m as the sintering aid. The powder mixture was formed by the press molding at 300 kg/cm$^2$ followed by the CIP treatment at 3 f/cm$^2$ to obtain blocks of 15 x 25 x 75 mm.

Respective blocks were sintered under various conditions shown in Table 1, and the minor axis diameter of $\beta$-Si$_3$N$_4$ columnar crystals in the sintered body and the fracture toughness were measured. As the method of measuring the minor axis diameter, each sintered body was cut, and the cut face was polished. 10 microphotographs were taken at 1,000 magnification at various positions. The full scope of one photograph corresponds to 7,000 $\mu$m$^2$. The mean diameter in the minor axis of the largest five crystals in each photograph was measured, and the mean value of 10 photographs was calculated. The fracture toughness was measured by the SEPE method. The results are summarized in Table 1.

## Table 1

| Experiment No. | Sintering Temp. ($^\circ$C) | Sintering Period (hr) | Minor Axis Diameter of Columnar ($\mu$m) | $K_{IC}$ (MPa•m$^{1/2}$) |
|---|---|---|---|---|
| 1 | 1900 | 5 | 6.0 | 8.7 |
| 2 | 1950 | 2 | 7.3 | 9.2 |
| 3 | 1950 | 10 | 10.6 | 11.3 |
| 4 | 2000 | 2 | 12.3 | 12.1 |
| 5 | 2000 | 10 | 15.0 | 12.0 |
| 6 | 1750 | 2 | 2.3 | 5.7 |
| 7 | 1750 | 10 | 2.6 | 6.0 |
| 8 | 1800 | 2 | 4.0 | 6.8 |

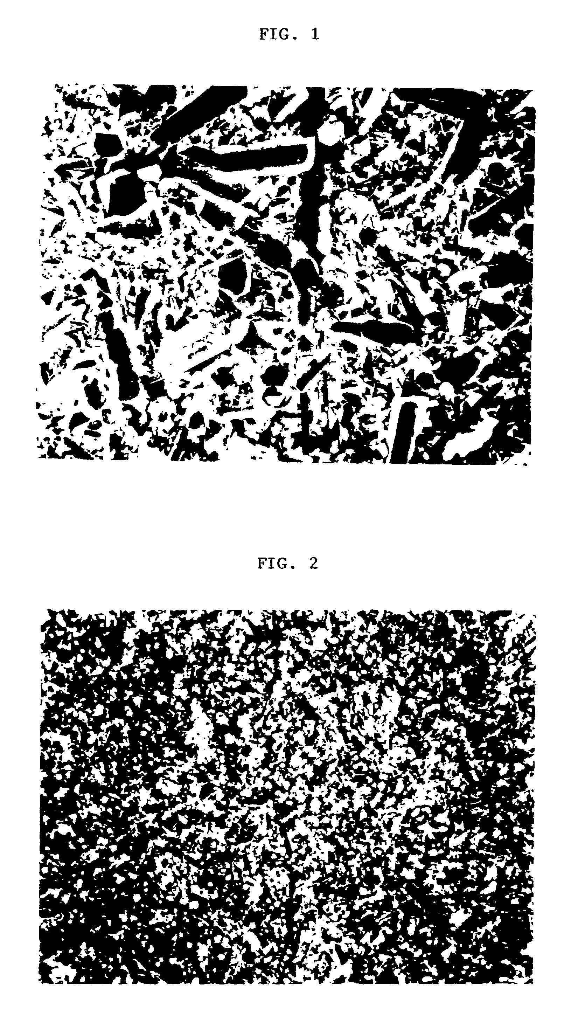

In the above experiments, the experiments numbered 1 to 5 corresponds to the examples of the invention, and the experiments numbered 6 to 8 corresponds to comparative examples. Figure 1 indicates a microphotograph of a cut face of the sintered body of the invention obtained in the experiment No. 3, and Figure 2 indicates a microphotograph of a cut face of the sintered body of a comparative example obtained in the experiment No. 6.

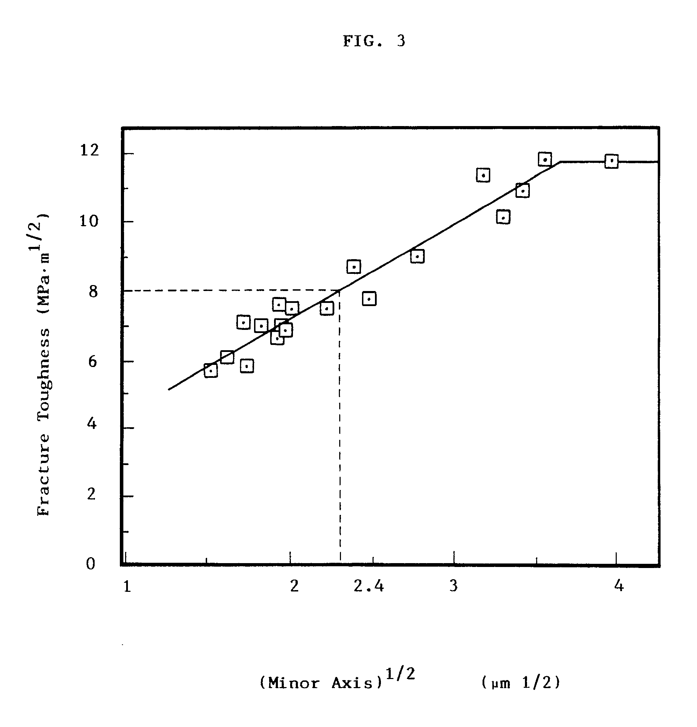

Subsequently, the relation between the square root of the minor axis diameter of the $\beta$-columnar crystals and the fracture toughness of the sintered bodies obtained in various experiment is shown in Figure 3. As shown in this figure, the fracture toughness increases in proportion to the square root of the minor axis diameter, and reaches a maximum value at about 12 $\mu$m of the minor axis diameter.

**Claims**

1. A monolithic silicon nitride sintered body, consisting essentially of $\beta$-$Si_3N_4$ columnar crystals of which the mean diameter in the width axis of the largest five crystals appearing in a cut area of 7,000 $\mu$m$^2$ is 6 to 20 $\mu$m, and having a fracture toughness of not less than 8 MPa·m$^{1/2}$.

2. The silicon nitride sintered body of claim 1 which contains 3 to 30 wt. % of a sintering aid.

3. The silicon nitride sintered body of claim 2 wherein the sintering aid is a member selected from the group consisting of $Y_2O_3$, rare earth oxides, $Al_2O_3$, MgO and AlN.

4. The silicon nitride sintered body of claim 1 wherein said mean diameter is 10 to 20 $\mu$m and said fracture toughness is 10 to 13 MPa·m$^{1/2}$.

5. A process for producing a monolithic silicon nitride sintered body consisting essentially of $\beta$-$Si_3N_4$ columnar crystals of which the mean diameter in the minor axis of the largest five crystals appearing in a cut area of 7,000 $\mu$m$^2$ is 6 to 20 $\mu$m, and having a fracture toughness of not less than 8 MPa·m$^{1/2}$, which comprises sintering a formed body consisting essentially of a silicon nitride powder having a particle size of 0.1 to 3 $\mu$m of which the $\alpha$-$Si_3N_4$ content is more than 90 % at a temperature of not less than 1900°C.

6. The process of claim 5 wherein the formed body contains 5 to 20 wt. % of a sintering aid.

7. The process of claim 5, wherein said temperature is 1900 to 2000°C.

FIG. 1

FIG. 2

FIG. 3

(Minor Axis)$^{1/2}$        ($\mu$m 1/2)